# EUROPÄISCHE PATENTSCHRIFT

(11) **EP 2 179 253 B1**
(45) Veröffentlichungstag und Bekanntmachung des Hinweises auf die Patenterteilung: **03.01.2018**
(21) Anmeldenummer: 08786025.0
(22) Anmeldetag: 10.07.2008
(51) Int. Cl.: G01F 1/66, G01P 5/24

(54) **KOPPELELEMENT FÜR EIN ULTRASCHALL-DURCHFLUSSMESSGERÄT**
COUPLING ELEMENT FOR AN ULTRASONIC FLOW MEASURING DEVICE
ELEMENT DE COUPLAGE POUR DEBITMETRE A ULTRASONS

(30) Priorität: 17.08.2007 DE 102007039016
(43) Veröffentlichungstag der Anmeldung: 28.04.2010
(73) Patentinhaber: Endress+Hauser Flowtec AG, 4153 Reinach (CH)
(72) Erfinder: BERGER, Andreas, 79686 Hasel-Glashütten (DE); MÜLLER, Quirin, CH-4132 Muttenz (CH); WIEST, Achim, 79576 Weil Am Rhein (DE)
(74) Vertreter: Andres, Angelika Maria
(86) Internationale Anmeldenummer: PCT/EP2008/058968
(87) Internationale Veröffentlichungsnummer: WO 2009/024403

(56) Entgegenhaltungen:
- EP-A- 0 198 731
- EP-A- 0 974 814
- EP-A- 1 840 530
- DE-A1-102007 010 500
- GB-A- 2 086 183
- US-A1- 2004 095 045

## Beschreibung

Die vorliegende Erfindung betrifft ein Koppelelement für ein Ultraschall-Durchflussmessgerät.

Ultraschall-Durchflussmessgeräte werden vielfach in der Prozess- und Automatisierungstechnik eingesetzt. Sie erlauben in einfacher Weise, den Volumendurchfluss in einer Rohrleitung berührungslos zu bestimmen.

Die bekannten Ultraschall-Durchflussmessgeräte arbeiten häufig nach dem Doppler- oder nach dem Laufzeitdifferenz-Prinzip.

Beim Laufzeitdifferenz-Prinzip werden die unterschiedlichen Laufzeiten von Ultraschallimpulsen relativ zur Strömungsrichtung der Flüssigkeit ausgewertet.

Hierzu werden Ultraschallimpulse sowohl in wie auch entgegen der Strömung gesendet. Aus der Laufzeitdifferenz lässt sich die Fließgeschwindigkeit und damit bei bekanntem Durchmesser des Rohrleitungsabschnitts der Volumendurchfluss bestimmen.

Beim Doppler-Prinzip werden Ultraschallwellen mit einer bestimmten Frequenz in die Flüssigkeit eingekoppelt und die von der Flüssigkeit reflektierten Ultraschallwellen ausgewertet. Aus der Frequenzverschiebung zwischen den eingekoppelten und reflektierten Wellen lässt sich ebenfalls die Fließgeschwindigkeit der Flüssigkeit bestimmen.

Reflexionen in der Flüssigkeit treten jedoch nur auf, wenn Luftbläschen oder Verunreinigungen in dieser vorhanden sind, so dass dieses Prinzip hauptsächlich bei verunreinigten Flüssigkeiten Verwendung findet.

Die Ultraschallwellen werden mit Hilfe so genannter Ultraschallwandler erzeugt bzw. empfangen. Hierfür sind Ultraschallwandler an der Rohrwandung des betreffenden Rohrleitungsabschnitts fest angebracht. Seit neuerem sind auch Clamp-on-Ultraschall-Durchflussmesssysteme erhältlich. Bei diesen Systemen werden die Ultraschallwandler nur noch mit einem Spannverschluss an die Rohrwandung gepresst. Derartige Systeme sind z. B. aus der EP-B-686 255, US-A 44 84 478 oder US-A 45 98 593 bekannt.

Ein weiteres Ultraschall-Durchflussmessgerät, das nach dem Laufzeitdifferenz-Prinzip arbeitet, ist aus der US-A 50 52 230 bekannt. Die Laufzeit wird hier mittels Bursts, das sind kurze sinusförmige Ultraschallimpulse, ermittelt.

Die Ultraschallwandler bestehen normalerweise aus einem Piezoelement, auch kurz Piezo genannt, und einem Koppelelement, auch Koppelkeil oder seltener Vorlaufkörper genannt, aus Kunststoff. Im Piezoelement werden die Ultraschallwellen erzeugt und über das Koppelelement zur Rohrwandung geführt und von dort in die Flüssigkeit geleitet. Da die Schallgeschwindigkeiten in Flüssigkeiten und Kunststoffen unterschiedlich sind, werden die Ultraschallwellen beim Übergang von einem zum anderen Medium gebrochen. Der Brechungswinkel bestimmt sich nach dem Snell'schen Gesetz. Der Brechungswinkel ist somit abhängig von dem Verhältnis der Ausbreitungsgeschwindigkeiten in den beiden Medien.

Aus dem Stand der Technik sind einer fachlich qualifizierten Person elektrische Kontaktierungen von Piezoelementen bekannt, welche Kontaktierungen auf der gegenüberliegenden Seite des einseitig flach aufgebrachten Piezoelements liegen, welches Piezoelements eine beidseitig aufgebrachte elektrisch leitfähige Beschichtung aufweist, wobei die Beschichtung der fest aufgebrachten Seite bis auf die gegenüberliegende Seite des Piezoelements führt, um dort kontaktiert zu werden. Dies führt dazu, dass die elektrisch leitfähige Beschichtung auf der gegenüberliegenden Seite des einseitig flach aufgebrachten Piezoelements nur einen Teil der Oberfläche bedeckt. So wird nur ein Teil der Piezofläche genutzt.

Herkömmliche Koppelemente sind aus Kunststoff gefertigt und weisen eine Bohrung auf, in der das Piezoelement appliziert wird. Aus fertigungstechnischen Gründen ist diese Applikation stark toleranzbehaftet. So kann es zu einer ungleichmäßigen Verteilung des Klebstoffs kommen, wodurch das Piezoelement einen undefinierten Abstand zum Koppelelement einnimmt. Weiterhin ist die Platzierung des Piezoelements in der Bohrung des Koppelelements toleranzbehaftet, wodurch die Position der Fläche des Schallaustritts von Sensor zu Sensor schwankt. Die Fertigung eines Piezoelements und damit die Größe der Fläche des Schallaustritts des Sensors unterliegt selbst gewissen Toleranzen. Die Summe der Toleranzen ergibt einen Messfehler.

Üblicherweise wird weiterhin ein Sensorhalter am Rohr ausgerichtet und entsprechend befestigt und das Koppelelement wird in dem Sensorhalter ausgerichtet. Dadurch addieren sich fertigungsbedingte Toleranzen einzelner, zusammengesetzter Bauteile zu einem Fehler in der Position des Piezos zur Rohrleitungswandung bzw. zum Messmedium und/oder zu einem weiteren Sensor bzw. zu dessen Piezoelement des Messsystems. Um diesen Fehler klein zu halten, müssen die einzelnen Bauteile aufwendig und damit kostenintensiv bearbeitet werden. EP0974814 A1 offenbart den Oberbegriff des Anspruchs 1.

Durch die beschriebene Bauweise treten üblicherweise hohe mechanische Spannungen am Piezoelement auf, welche aufgrund von thermischen Ausdehnungen oder aufgrund der mechanischen Befestigung des Sensors an einer Rohrleitung entstehen und über die Wände des Koppelelements übertragen werden.

Die Aufgabe der Erfindung besteht daher darin, einen kostengünstig herzustellenden und eine kompakte Bauweise aufweisenden Sensor für ein Ultraschall-Durchflussmessgerät vorzuschlagen.

Die Aufgabe wird durch ein Koppelelement nach Anspruch 1 gelöst.

Die wesentliche Idee der Erfindung besteht darin, dass ein Piezoelement auf einer, dem Piezoelement zugewandten Fläche des Podests des Koppelelements mittels einer Klebstoffschicht fest angebracht wird. Dazwischen kann in der üblichen Weise eine Anpassungsschicht aufgebracht sein. Die dem Piezoelement zugewandte Fläche des Podests bzw. der Anpassungsschicht könnte als Klebefläche bezeichnet werden. Das Koppelelement mit dem Podest wird aus einem Stück gefertigt. Durch den Freiraum des Podests gegenüber den Außenflächen und der Innenwand des Koppelelements werden mechanische Spannungen im Sensor, z.B. durch das Festmachen des Sensors mittels einer Schraube oder durch Temperaturschwankungen, nur in geringem Maße bis an das Piezoelement geleitet. Die Funktion des Piezoelements bleibt davon unbeeinflusst. Ein weiterer Grundgedanke der Erfindung besteht in der Verwendung von sehr wenigen Bauteilen. Es entsteht somit ein kleiner Ultraschallsensor mit wenigen Bauteilen.

Gemäß einer vorteilhaften Weiterbildung der erfindungsgemäßen Vorrichtung wird das einstückige Koppelement in einer Aufspannung gefertigt bzw. endbearbeitet, so dass sämtliche Funktionsflächen mit fertigungsbedingt sehr kleinen Toleranzen in ihrer Größe und Form und insbesondere in ihrer Ausrichtung zueinander definiert sind. Besonders vorteilhaft wird die erfindungsgemäße Vorrichtung bei Durchflussmesssystemen auf Basis von Ultraschall eingesetzt. Ein erfindungsgemäßer Ultraschallsensor kann für alle denkbaren Rohrdurchmesser eingesetzt werden und eine dementsprechende Größe annehmen. Für Rohre mit einer Nennweite von bspw. ca. 50mm könnte die Podesthöhe PH ungefähr 1 bis 3mm betragen. Bei der Befestigung des Piezoelements fließt der Kleber nicht bis zum Podestauslauf. Kleber, der vom Podest bis zum Podestauslauf fließt, könnte als akustische und/oder mechanische Brücke verbindend wirken und somit akustische Signale und/oder mechanische Spannungen auf den Piezo übertragen. Das Koppelelement kann z.B. durch spanabhebende Bearbeitung oder durch Giessen hergestellt werden.

Eine additive Ausgestaltung der erfindungsgemäßen Vorrichtung schlägt vor, dass ausreichend weite Radien am Podestauslauf gefertigt sind, um möglichst keine Kerbspannungen zu erzeugen und damit Risse im Material zu verhindern. Je nach Material und Einsatzbedingungen (z.B. Temperatur) müssen diese entsprechend angepasst sein. Eine Anpassungsschicht, bevorzugt eine Scheibe, insbesondere aus einem Werkstoff, wie z.B. Glas und/ oder Aluminium wird so auf dem Podest aufgebracht, dass die dann freie Oberfläche der Anpassungsschicht, die Klebefläche für das Aufbringen des Piezoelements bildet. Der thermische Ausdehnungskoeffizient solcher Anpassungsschichten liegt meist zwischen dem des Koppelements und dem des Piezoelements.

Eine vorteilhafte Ausgestaltung der erfindungsgemäßen Vorrichtung schlägt vor, dass das Piezoelement, welches auf dem Podest des Koppelelements appliziert wird, über die Auflagefläche des Podests hinaus ragt. Die Fläche des Piezoelements, welche auf dem Podest befestigt wird, ist größer als die Fläche des Podests, auf der das Piezoelement befestigt wird, und steht damit über den Rand des Podests über, insbesondere steht das Piezoelement über alle Seiten des Podests über. Somit sind Position und Fläche des Schallaustritts genau bekannt. Die Fertigungsgenauigkeit des Podests liegt standartgemäß im Bereich von 1/100mm. Zum Vergleich hat das Piezoelement eine Standarttoleranz von 1/10 bis 2/10mm. Um das Piezoelement ebenfalls im 1/100mm-Bereich zu fertigen, bedarf es eines enormen Kostenmehraufwands. Um ein Piezoelement mit einer Toleranz im Bereich von 1/100mm auf einer Fläche zu applizieren, bedarf es einer hochgenauen und sehr aufwendigen und damit kostenintensiven Technologie. Diese ist bei der Montage der erfindungsgemäßen Vorrichtung nicht nötig, da der Piezo auf den Seiten des Podests unterschiedlich weit überstehen darf. Die Fläche des Schallaustritts wird erfindungsgemäß über die Podestfläche definiert.

Die Ausgestaltung der erfindungsgemäßen Vorrichtung sieht vor, dass das Podest eine wannenförmige Vertiefung mit einer umfänglichen Umrandung und einem Wannenboden aufweist, wobei die dem Piezoelement zugewandte Fläche der Umrandung, die Auflagefläche für das Piezoelement bildet, welche Auflagefläche eine Höhe HU gegenüber dem Wannenboden aufweist und wobei die wannenförmige Vertiefung mindestens teilweise mit Klebstoff gefüllt ist. Der Wannenboden bildet somit die Klebefläche. Allerdings kann auch hier eine Anpassungsschicht auf bzw. in dem Wannenboden aufgebracht sein. Das Piezoelement liegt auf der Umrandung, also auf den Wannenrändern auf. Die Wanne wird bis zur Höhe der Umrandung, also bis zur Höhe des Podests HP, mit Klebstoff aufgefüllt, bevor das Piezoelement eingebracht wird. Der Klebstoff verliert beim Trocknungs- bzw. Aushärtungsprozess wenig oder keine Masse, d.h. er schwindet bzw. schrumpft erfindungsgemäß sehr wenig oder überhaupt nicht, so dass das Piezoelement nur sehr wenig oder überhaupt nicht in die Wanne hineingezogen und dabei nur geringfügig oder überhaupt nicht verformt wird.

Nach einer sehr vorteilhaften Ausführungsform der erfindungsgemäßen Vorrichtung weist die Klebstoffschicht über ihre näherungsweise gesamte Fläche die gleiche Dicke auf und verläuft parallel zum Piezo. Eine genaue Definition der Klebstoffschicht ist durch die Wanne des Podests, z.B. mit Überlauf, möglich. Dadurch wird eine genau definierte Klebstoffmenge und deren Verteilung bestimmt.

Gemäß einer vorteilhaften Ausführungsform der erfindungsgemäßen Vorrichtung wird vorgeschlagen, dass das Koppelement Führungselemente aufweist, welche um das Podest verteilt sind, welche näherungsweise gleiche Abstände A zu dem Podest aufweisen und welche näherungsweise gleiche Höhen HN aufweisen, wobei HN größer ist als die Höhe der Auflagefläche des Podests HP. Dabei sind die Führungselemente federnd gelagert bzw. sehr elastisch, z.B. möglichst dünn, so dass ihr Einfluss auf das Schallfeld näherungsweise Null ist. Der Ultraschall wird erfindungsgemäß nur über das Podest in die senkrechte Richtung des flach aufgebrachten Piezoelements übertragen. Die Führungselemente haben Fertigungstechnische bzw. Bestückungstechnische Vorteile. Vorteilhaft sind sie aus dem Koppelelement herausgearbeitet, sind also integraler Bestandteil. Weiterhin vorteilhaft sind sie als austauschbare bzw. nach dem Bestückungsprozess entfernbare Stifte ausgebildet, die zur Bestückung in dafür vorgesehene Stiftlöcher platziert werden. Alternativ können auch Führungsnasen angebracht sein.

Eine vorteilhafte Ausführungsform der erfindungsgemäßen Vorrichtung besteht darin, dass das Piezoelement sowohl auf der dem Podest zugewandten Seite, als auch auf der dem Podest abgewandten Seite über die jeweils näherungsweise gesamte Fläche elektrisch kontaktiert wird, insbesondere dass ein Drahtgeflecht bzw. Drähte mit einer näherungsweise gleichen Dicke zwischen dem Piezoelement und der Auflagefläche und/oder zwischen dem Piezoelement und dem Wannenboden des Podests angeordnet sind. Im Nachfolgenden ist von dem Drahtgeflecht die Rede. Das Drahtgeflecht kann auch stellvertretend für einen einzelnen Draht oder für mehrere einzelne Drähte stehen. Es ist zwischen dem Piezoelement und der Klebefläche des Podests angeordnet. Dieses Drahtgeflecht besteht bevorzugt aus elektrisch leitendem Material und ist mit dem Piezoelement fest und/oder elektrisch leitend verbunden. Durch das Überstehen des Piezos über die Auflagefläche und/oder durch die Anbringung von dem Drahtgeflecht ist es möglich, beide Seiten des Piezos direkt zu kontaktieren und somit die gesamte Fläche des Piezos zu nutzen. Zusätzlich dient das Drahtgeflecht in der Wanne des Podests als Abstandshalter zwischen Piezo und Wannenboden bzw. Klebefläche. Alternativ zur Wanne des Podests, mittels der Umrandung, kann das Drahtgeflecht auf einer flachen Auflagefläche des Podests aufliegen und selbst als Wanne zum definierten Aufbringen des Klebstoffs dienen. Gleichzeitig behält es die vorgenannten Aufgaben als Abstandshalter und zur elektrischen Kontaktierung des Piezos.

Eine sehr vorteilhafte Ausgestaltung der erfindungsgemäßen Vorrichtung ist darin zu sehen, dass das Koppelelement mindestens eine weitere Funktionsfläche aufweist, mittels derer ein Sensorhalter um das Koppelelement ausgerichtet wird und/oder mittels derer das Koppelelement auf bzw. an einer Rohrleitung ausgerichtet wird, in welcher das zu messende Medium strömt. Erfindungsgemäß wird das Koppelelement selbst an der Rohrleitung, in welcher das zu messende Medium strömt, ausgerichtet. Eine Grundfläche des Koppelelements wird vorgeschlagen, die als Funktionsfläche zur Ausrichtung dient, welche in einer Aufspannung mit der Auflage- bzw. Klebefläche zum Anbringen des Piezos gefertigt ist. Der Winkel und der relative Ort des Piezos zu Außenflächen und anderen Körpern des Messsystems, insbesondere zur Rohrleitung und zum Messmedium, sind, entsprechend der kleinen Toleranzen, genau bestimmt.

Besonders vorteilhaft ist zusätzlich zur Grundfläche des Koppelelements die Fläche, z.B. auf dem Rohr, auf welcher das Koppelelement ausgerichtet wird, entsprechend bearbeitet. Zur Befestigung des ausgerichteten Koppelelements sind als weitere Funktionsflächen z.B. eine Befestigungsbohrung oder eine Einbaugeometrie für ein Druckstück im Koppelelement vorgesehen.

Eine weitere Funktionsfläche des Koppelelements stellt die Fläche zur Anbringung des Sensorhalters dar. Somit ist die Position des Sensorhalters um das Koppelelement, der geringen Fertigungstoleranzen entsprechend, exakt definiert, insbesondere mit bekanntem, erfindungsgemäß sehr geringem, Einfluss auf das Schallfeld und damit auf die Messung. Diese Anordnung der Funktionsflächen ist insbesondere für Clamp-On Ultraschallmessgeräte geeignet. Bei Einbausensoren dient der Sensorhalter zur Ausrichtung des Koppelelements zur Rohrleitung hin. Meist ist der Sensorhalter dabei mit der Rohrleitung stoffschlüssig verbunden. Durch entsprechende Bearbeitung des Sensorhalters lässt sich die Schallaustrittsfläche, der geringen Fertigungstoleranzen entsprechend, ebenso exakt, z.B. zum Messmedium hin, positionieren.

Eine weitere sehr vorteilhafte Ausgestaltung der erfindungsgemäßen Vorrichtung besteht darin, dass das Koppelelement mindestens eine weitere Funktionsfläche aufweist, mittels derer ein Knickschutz für die Anschlusskabel, welcher als Durchgangsdichtung für die Anschlusskabel dient, am Koppelelement ausgerichtet wird. Der Knickschutz wird einfach und positionsgenau auf das Koppelelement mittels der Funktionsfläche aufgesteckt. Besonders vorteilhaft wird der Knickschutz als Verguss auf das Koppelelement aufgespritzt, wodurch Bauteile und Bearbeitungsschritte eingespart werden.

Eine weitere sehr Vorteilhafte Ausgestaltung der erfindungsgemäßen Vorrichtung schlägt vor, dass das Koppelelement mindestens eine weitere Funktionsfläche aufweist, mittels derer eine Anschlussplatine am Koppelelement ausgerichtet wird.

Eine ergänzende Ausführung der erfindungsgemäßen Vorrichtung ist, dass zwei Sensoren, die auf der Rohrleitung, in welcher das zu messende Medium strömt, angebracht sind, welche zu einem Messsystem gehören, wobei die Kontaktierung des Piezoelements auf der jeweils anderen Seite der zwei Piezoelemente vorgenommen ist. Dies ist insbesondere bei Sensoren von Vorteil, die auf der gleichen Seite der Rohrleitung, in welcher das zu messende Medium strömt, angebracht sind, also zu einem Messsystem gehören, welches die gegenüberliegende Rohrleitungswand als Reflektionskörper nutzt.

Eine Variante der erfindungsgemäßen Vorrichtung besteht darin, dass eine Aussparung im Podest zur Kontaktierung des Piezoelements vorgesehen ist und/oder ein größerer Piezoüberstand zu einer bestimmten Seite des Podests zur Kontaktierung des Piezoelements vorgesehen ist.

Eine weitere Variante der erfindungsgemäßen Vorrichtung besteht darin, dass ein Überlauf in der Umrandung des Podests vorgesehen ist, damit die Klebstoffschicht eine genau definierte Dicke besitzt. Durch diesen Überlauf könnte ein Draht geführt werden, der zu dem in der Wanne liegenden Drahtgeflecht gehört, der z.B. zur Kontaktierung des Piezoelements vorgesehen ist.

Die Erfindung wird anhand der nachfolgenden Figuren näher erläutert.
Fig. 1 zeigt perspektivisch ein nicht erfindungsgemäßes Koppelelement für ein Ultraschall-Durchflussmessgerät.
Fig. 2 zeigt eine Schnittdarstellung eines nicht erfindungsgemäßen Koppelelements mit Knickschutz.
Fig. 3 zeigt eine Detaildarstellung eines Koppelelements mit Knickschutz gemäß Fig. 2.
Fig. 4 zeigt eine Schnittdarstellung eines erfindungsgemäßen Koppelelements.
Fig. 5 zeigt perspektivisch ein Koppelelement mit Knickschutz für ein Ultraschall-Durchflussmessgerät gemäß Fig. 2.
Fig. 6 zeigt eine Schematische Darstellung eines Systems zur Ultraschall-Durchflussmessung.
Fig. 7 zeigt den Stand der Technik einer Kontaktierung eines flach aufliegenden Piezoelements.
Fig. 8 zeigt eine Schnittdarstellung eines weiteren erfindungsgemäßen Koppelelements.

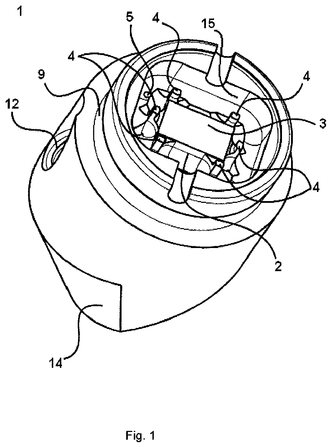

In der perspektivischen Darstellung der Fig. 1 ist ein Koppelelement 1 mit einem Podest 2 zu sehen. Das Podest 2 ist integraler Bestandteil des Koppelements 1. Es besteht nicht nur aus dem gleichen Material wie das Koppelelement 1, einem Hochtemperatur-Thermoplasten, und ist mit diesem, z.B. durch eine Klebeverbindung stoffschlüssig verbunden, sondern das Koppelelement 1 mit dem Podest 2 ist aus einem Körper, sozusagen aus dem Vollen, gefertigt.

Das Podest 2 weist eine Auflagefläche 3 auf, auf der das Piezoelement 19 (nicht in Fig. 1 sichtbar) appliziert wird. Die Auflagefläche 3 ist in dieser Darstellung gleichzeitig die Klebefläche, worauf die Klebstoffschicht aufgetragen wird. Alternativ kann auf die Auflagefläche 3 eine Anpassungsschicht 20 (nicht auf Fig. 1 sichtbar) aufgebracht sein oder eine Anpassungsschicht ist in die Auflagefläche eingelassen, so dass die Anpassungsschicht 20 ihrerseits die Klebefläche bildet.

Neben der Auflagefläche 3 weist das Podest 2 Führungselemente 4 auf, welche die Auflagefläche 3 in der Höhe überragen. Die Führungselemente 4 sind sehr elastisch oder federnd gelagert und fungieren als Bestückungshilfen bei der Fertigung bzw. der Montage des Piezoelements. In diesem Ausführungsbeispiel sind die Führungselemente 4 in das Podest 2 integriert. Alternativ können sie neben dem Podest 2 platziert sein. Außer den gezeigten Führungselementen 4 sind Stiftlöcher zur Aufnahme wieder entfernbarer Stifte zur Positionierung bzw. zur Montage des Piezoelements möglich, durch welche die Führungselemente 4 wie beschrieben ersetzt werden können.

Ferner hat das Koppelelement 1 ein Stiftloch 5, welches zur Aufnahme eines Lötstifts 6 (nicht in Fig. 1 sichtbar) vorgesehen ist. Dieser dient der Kontaktierung des Piezoelements. Alternativ kann auf der Auflagefläche 3 des Podests 2 ein Drahtgeflecht aufgebracht sein, welches zur Kontaktierung des Piezoelements 19 dient und gleichzeitig eine Wanne zur Aufnahme des Klebstoffs bildet.

Das Koppelelement 1 ist weiterhin mit einem Einstich 9 versehen, welcher die Funktionsfläche für die Aufnahme eines Knickschutzes 10 (nicht in Fig. 1 sichtbar) bildet. Als weitere Funktionsflächen sind eine Einbaugeometrie 12 für ein Druckstück 13 (nicht in Fig. 1 sichtbar) und eine Positioniergeometrie 14 (nicht in Fig. 1 sichtbar) gezeigt. Der Einstich 9 ermöglicht ein einfaches und sicheres Anbringen des Knickschutzes 10 (nicht in Fig. 1 sichtbar), damit dieser in seiner Position exakt bestimmt ist. An die Positioniergeometrie 14 wird der Sensor an einen Sensorhalter angelegt. Eine weitere Funktionsfläche, welche zur Ausrichtung des Koppelelements 1 am Messrohr genutzt wird, ist in dieser Abbildung nicht zu sehen.

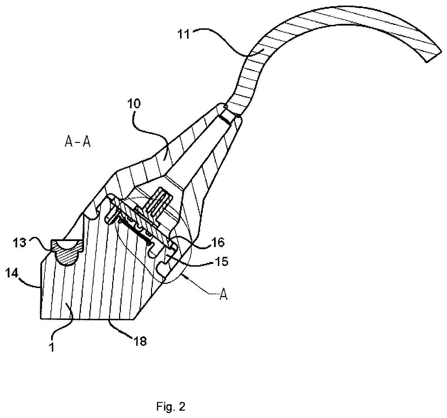

In Fig. 2 ist eine Schnittdarstellung eines nicht erfindungsgemäßen Koppelelements 1 mit Knickschutz 10 gezeigt. Der Knickschutz 10 ist auf das Koppelelement 1 aufgesteckt. Durch diesen Knickschutz 10 werden die Kabel zwischen Sensor und Auswerteeinheit des Durchflussmessgeräts geschützt, welche durch das Verbindungskabel 11 geführt werden. Die Kabel sind sensorseitig mit der Anschlussplatine 16 verbunden. Diese Anschlussplatine 16 wird radial durch einen Platinenhalter 17 als weitere Funktionsfläche gestützt und axial zwischen Knickschutz 10 und Platinenhalter 17 des Koppelelements 1 festgehalten. Der Platinenhalter 17 ist als Schulter des Koppelelements 1 ausgebildet. Die Höhe HH der Innenwand 15 ist entsprechend größer als die Höhe HN der Führungselemente 4 und als die Höhe HP des Podests 1 plus der Dicke des Piezoelements 19 und eventuellen Anpassungs- und/oder Klebstoffschichten.

Als weitere Funktionsfläche ist eine Schallaus- und Einkoppelfläche, die auch die Funktion einer Ausrichtgeometrie 18 zur Ausrichtung des Koppelelements 1 am Messrohr hat, gezeigt. Je nach Bauart des Koppelelements 1 kann die Ausrichtgeometrie 18 eine Funktionsfläche mit der Positioniergeometrie 14 bilden. In der Einbaugeometrie 12 ist das Druckstück 13 eingesetzt. Damit lässt sich das Koppelelement 1 auf bzw. an einer Rohrleitung festmachen.

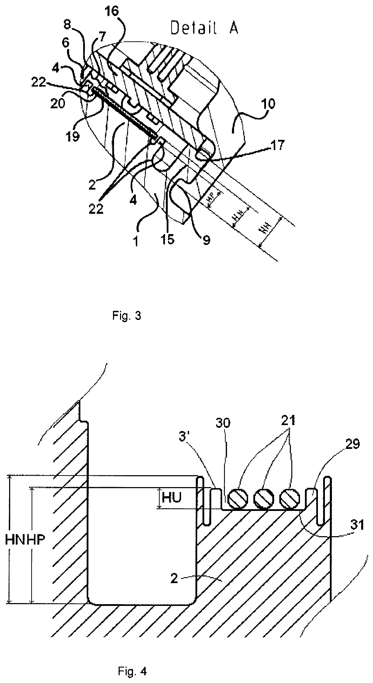

Weitere Merkmale sind der Detailzeichnung Fig. 3 zu entnehmen.

Die Anschlussplatine 16 liegt in dem schulterartig ausgebildeten Platinenhalter 17 der Innenwand 15 des Koppelelements 1 und ist über eine Lötung 8 oder Nietung mit dem Lötstift 6 verbunden, der seinerseits über einem Anschlusskabel 7 mit dem Piezoelement 19 verbunden ist. Dadurch ist der elektrische Kontakt zwischen Piezoelement 19 und Anschlussplatine 16 hergestellt. Das Piezoelement selbst ist über eine Anpassungsschicht 20 mit der Auflagefläche 3 des Podests 2 verklebt. Die Anpassungsschicht 20 hat in dieser Darstellung näherungsweise die gleiche Größe wie das Piezoelement 19. Sowohl Anpassungsschicht 20, als auch Piezoelement 19 stehen seitlich über die Auflagefläche 3 des Podests 2 über.

Am Podestauslauf und an den Ausläufen der Führungselementen 4 sind großzügige Radien 22 vorgesehen, damit keine Kerbspannungen auftreten und sonstige mechanische Spannungen nicht zu Bauteilen in der näheren Umgebung ein- oder weitergeleitet werden. Die Höhe HN der Führungselemente ist größer als die Höhe der Auflagefläche HP plus der Dicke des Piezoelements 19 und der Dicke der Anpassungsschicht 20 und einer aus Gründen der Übersichtlichkeit nicht dargestellten Dicke der Klebstoffschicht. Die Höhe HH der Innenwand 15 kann größer als die Höhe der Führungselemente 4 sein.

Fig. 4 zeigt eine detaillierte Schnittdarstellung eines Ausführungsbeispiels eines erfindungsgemäßen Koppelelements. Das Podest 2 weist eine wannenförmige Vertiefung 30 mit einer umfänglichen Umrandung 29 und einem Wannenboden 31 auf. In der wannenförmigen Vertiefung 30 wird Klebstoff bis zur Höhe Auflagefläche 3' gefüllt. Ein Drahtgeflecht 21 kann ebenfalls in der wannenförmigen Vertiefung eingesetzt sein. Dieses kann zur Stabilität beitragen und/oder zur Kontaktierung des Piezos genutzt werden. Die Höhe HU der Auflagefläche 3' über dem Wannenboden 31 beträgt bevorzugt ein Viertel der Wellenlänge des Ultraschalls in der Klebeschicht, z.B. 0.2mm die Dicke der Umrandung 29 etwa die Hälfte davon bevorzugt 0,1mm. Eine Anpassungsschicht kann sowohl auf den Wannenboden 31 appliziert sein bzw. in den Wannenboden 31 integriert sein, als auch mit dem Piezoelement 19 flächig und fest verbunden sein und damit, unter dem Piezoelement 19, auf der Auflagefläche 3' der Umrandung 29 aufliegen, was aus Übersichtlichkeitsgründen nicht dargestellt wurde.

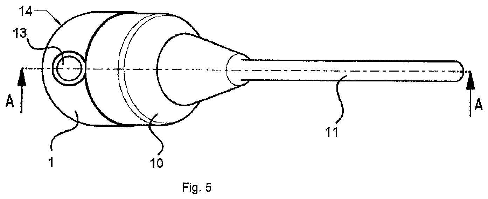

In Fig. 5 ist perspektivisch ein Koppelelement 1 mit Knickschutz 10 für ein Ultraschall-Durchflussmessgerät gemäß Fig. 2 gezeigt.

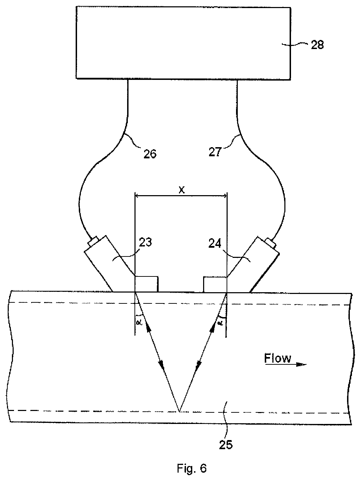

Fig. 6 zeigt eine stark vereinfachte schematische Darstellung eines Systems zur Ultraschall-Durchflussmessung mit zwei Ultraschallwandlern 23, 24, die auf der Außenwand einer Rohrleitung 25 achsparallel versetzt angeordnet sind. Das Messmedium in der Rohrleitung 25 fließt in Pfeilrichtung.

Dieses Wandlerpaar kann auf zwei unterschiedliche Weisen betrieben werden. Entweder wirkt der Ultraschallwandler 23 als Sendewandler und der Ultraschallwandler als 24 als Empfängerwandler oder der Ultraschallwandler 23 als Empfängerwandler und der Ultraschallwandler 24 als Sendewandler, wodurch abwechselnd in Strömungsrichtung bzw. entgegen der Strömungsrichtung gemessen wird.

Jeder der Ultraschallwandler 23 bzw. 24 besteht aus jeweils einem erfindungsgemäßen Koppelelement 1 mit Piezoelement 19, das die Ultraschallsignale unter einem von 90° verschiedenen Winkel α entweder in die Wandung der Rohrleitung 25 ein- bzw. auskoppelt. Der Winkel α ist so gewählt, dass das an der gegenüberliegenden Wandung der Rohrleitung 25 reflektierte Signal auf den jeweils anderen Ultraschallwandler trifft.

Die Piezoelemente 19 wandeln dabei entweder elektrische Impulse in mechanische Schwingungen, die eigentlichen Ultraschallsignale, oder umgekehrt mechanische Schwingungen in elektrische Impulse um.

Beide Ultraschallwandler 23, 24 sind jeweils über Anschlussleitungen 26 bzw. 27 mit einer Messschaltung 28 verbunden. Über diese Anschlussleitungen 26, 27 werden die elektrischen Impulse geführt. Derartige Messschaltungen 28 sind bekannt und nicht Gegenstand der Erfindung.

Mit dem erfindungsgemäßen Koppelelement ist eine flächige Anlage der Ultraschallwandler gegeben und damit der Winkel zur Rohrleitung sehr genau bestimmt. Der Abstand x der beiden Ultraschallwandler und der Winkel α des Signals bestimmen wesentlich die Messgenauigkeit der Messanordnung. Mit dem erfindungsgemäßen Koppelelement lassen sich diese Parameter sehr präzise einstellen.

Neben der Ausrichtung der Messanordnung spielen Streuverluste und Reflexionen des Ultraschallsignals eine wichtige Rolle in der Ultraschall-Durchflussmessung. Auch hier ist eine Minimierung beider Effekte im Sensor und an dessen Grenzflächen zum Stand der Technik durch das erfindungsgemäße Koppelelement gegeben.

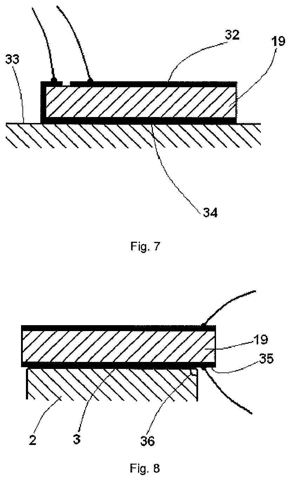

In Fig. 7 ist der Stand der Technik der Kontaktierung eines Piezoelements vorgestellt. Dadurch dass das Piezoelement 19 flach auf einer Auflagefläche 34 liegt, ist die Kontaktierung dieser Seite nicht möglich. Daher bedeckt eine erste elektrisch leitende Beschichtung 32, die auf der auflageflächeabgewandten Seite des Piezos aufgebracht ist, nur einen Teil der Piezofläche. Eine zweite elektrisch leitende Beschichtung 33, die zur Kontaktierung der aufliegenden Seite des Piezos 19 aufgebracht ist, wird durchgehend bis zu einem Teil der auflageflächeabgewandten Seite des Piezos 19 aufgetragen. Somit ist nicht das gesamte Piezoelement zum Senden und/oder Empfangen von Schwingungen nutzbar, sondern lediglich die Fläche zwischen beiden Beschichtungen. Da das so kontaktierte Piezoelement 19 auf der Auflagefläche 34 appliziert ist und die Applikation mit großen Ungenauigkeiten in der Ausrichtung behaftet ist, ist die Schallaustritts- bzw. die Schalleintrittsfläche nicht genau bestimmt.

Das erfindungsgemäße Koppelelement 1 erlaubt durch ein Drahtgeflecht 21 oder, wie in Fig. 8 dargestellt, durch das Überstehen des Piezos 19 über die Auflagefläche eine beidseitige, vollflächige Kontaktierung des Piezos 19. Erfindungsgemäß kann dabei das Piezoelement 19 auf einer Seite der Auflagefläche 3 des Podests 2 einen größeren Überstand 35 haben als auf anderen Seiten oder eine Aussparung 36 ist in dem Podest 2 zur Kontaktierung des Piezos 19 eingelassen. Die Schallaustritts- bzw. Schalleintrittsfläche ist aufgrund der geringeren Fertigungstoleranzen des Podests 2 genau bestimmt, da die Applikationstoleranzen keine wesentliche Rolle mehr spielen.

### Bezugszeichenliste

- 1.: Koppelelement
- 2.: Podest
- 3.: Auflagefläche
- 4.: Führungselemente
- 5.: Stiftloch
- 6.: Lötstift
- 7.: Anschlusskabel
- 8.: Lötung
- 9.: Einstich
- 10.: Knickschutz
- 11.: Verbindungskabel
- 12.: Einbaugeometrie
- 13.: Druckstück
- 14.: Positioniergeometrie
- 15.: Innenwand
- 16.: Anschlussplatine
- 17.: Platinenhalter
- 18.: Ausrichtgeometrie
- 19.: Piezoelement
- 20.: Anpassungsschicht
- 21.: Drahtgeflecht
- 22.: Radien
- 23.: Ultraschallwandler
- 24.: Ultraschallwandler
- 25.: Rohrleitung
- 26.: Anschlussleitung
- 27.: Anschlussleitung
- 28.: Messschaltung
- 29.: Umrandung
- 30.: wannenförmige Vertiefung
- 31.: Wannenboden
- 32.: elektrisch leitende Beschichtung
- 33.: elektrisch leitende Beschichtung
- 34.: Piezoauflagefläche
- 35.: Piezoüberstand
- 36.: Aussparung

## Patentansprüche

1. Koppelelement für ein Ultraschall-Durchflussmessgerät, welches ein Podest (2) mit einer Auflagefläche (3, 3') aufweist, auf welcher ein Piezoelement (19) appliziert ist und welches Podest (2) integraler Bestandteil des Koppelelements (1) ist,
**dadurch gekennzeichnet,**
**dass** das Podest (2) eine wannenförmige Vertiefung (30) mit einer umfänglichen Umrandung (29) und einem Wannenboden (31) aufweist, wobei die dem Piezoelement (19) zugewandte Fläche der Umrandung (29) des Podests (2), die Auflagefläche (3, 3') für das Piezoelement (19) bildet, welche Auflagefläche (3, 3') eine Höhe (HU) gegenüber dem Wannenboden (31) aufweist und wobei die wannenförmige Vertiefung (30) mindestens teilweise mit Klebstoff gefüllt ist.

2. Koppelelement für ein Ultraschall-Durchflussmessgerät nach Anspruch 1,
**dadurch gekennzeichnet,**
**dass** das Piezoelement (19), welches auf dem Podest (2) des Koppelelements (1) appliziert wird, über die Auflagefläche (3, 3') des Podests (2) hinaus ragt.

3. Koppelelement für ein Ultraschall-Durchflussmessgerät nach Ansprüchen 1 bis 2,
**dadurch gekennzeichnet,**
**dass** das Koppelement (1) Führungselemente (4) aufweist, welche um das Podest (2) verteilt sind, welche näherungsweise gleiche Abstände A zu dem Podest (2) aufweisen und welche näherungsweise gleiche Höhen (HN) aufweisen, wobei die Höhen (HN) größer sind als die Höhe (HP) der Auflagefläche (3, 3') des Podests (2).

4. Koppelelement für ein Ultraschall-Durchflussmessgerät nach Ansprüchen 1 bis 3,
**dadurch gekennzeichnet,**
**dass** das Piezoelement (19) sowohl auf der dem Podest (2) zugewandten Fläche, als auch auf der dem Podest abgewandten Fläche über die jeweils näherungsweise gesamte Fläche elektrisch kontaktiert ist.

5. Koppelelement für ein Ultraschall-Durchflussmessgerät nach Ansprüchen 1 bis 4,
**dadurch gekennzeichnet,**
**dass** ein Drahtgeflecht (21) bzw. Drähte mit einer näherungsweise gleichen Dicke zwischen dem Piezoelement (19) und der Auflagefläche (3, 3') und/oder zwischen dem Piezoelement (19) und dem Wannenboden (31) des Podests (2) angeordnet sind.

6. Koppelelement für ein Ultraschall-Durchflussmessgerät nach Ansprüchen 1 bis 5,
**dadurch gekennzeichnet,**
**dass** das Koppelelement (1) mindestens eine erste Funktionsfläche (14) aufweist, mittels der ein Sensorhalter um das Koppelelement (1) ausrichtbar ist und/oder mittels der das Koppelelement (1) auf bzw. an einer Rohrleitung (25) ausrichtbar ist, in welcher das zu messende Medium strömt.

7. Koppelelement für ein Ultraschall-Durchflussmessgerät nach Ansprüchen 1 bis 6,
**dadurch gekennzeichnet,**
**dass** das Koppelelement (1) mindestens eine zweite Funktionsfläche (9) aufweist, mittels der ein Knickschutz (10) für die Anschlusskabel, welcher als Durchgangsdichtung für die Anschlusskabel dient, am Koppelelement (1) ausrichtbar ist.

8. Koppelelement für ein Ultraschall-Durchflussmessgerät nach Ansprüchen 1 bis 7,
**dadurch gekennzeichnet,**
**dass** das Koppelelement (1) mindestens eine dritte Funktionsfläche (17) aufweist, mittels der eine Anschlussplatine (16) am Koppelelement (1) ausrichtbar ist.

## Claims

1. Coupler element for an ultrasonic flowmeter, which has a platform (2) with a support surface (3, 3') on which a piezoelement (19) is applied and wherein said platform (2) is an integral part of the coupler element (1),
**characterized in that**
the platform (2) has a tub-shaped cavity (30) with a comprehensive peripheral edge (29) and a tub floor (31), wherein the surface of the peripheral edge (29) of the platform (2) facing towards the piezoelement (19) forms the support surface (3, 3') for the piezoelement (19), wherein said support surface (3, 3') has a height (HU) in relation to the tub floor (31) and wherein the tub-shaped cavity (30) is at least partially filled with glue.

2. Coupler element for an ultrasonic flowmeter as claimed in Claim 1,
**characterized in that**
the piezoelement (19), which is applied on the platform (2) of the coupler element (1), projects out over the support surface (3, 3') of the platform (2).

3. Coupler element for an ultrasonic flowmeter as claimed in Claims 1 and 2,
**characterized in that**
the coupler element (1) has guide elements (4) which are distributed around the platform (2), said elements being approximately at equal distances A from the platform (2) and which have approximately the same heights (HN), wherein the heights (HN) are greater than the height (HP) of the support surface (3, 3') of the platform (2).

4. Coupler element for an ultrasonic flowmeter as claimed in Claims 1 to 3,
**characterized in that**
the piezoelement (19) is in electrical contact approximately over the entire surface, both on the surface facing towards the platform (2) and on the surface facing away from the platform.

5. Coupler element for an ultrasonic flowmeter as claimed in Claims 1 to 4,
**characterized in that**
a wire mesh (21) or wires of approximately the same thickness are arranged between the piezoelement (19) and the support surface (3, 3') and/or between the piezoelement (19) and the tub floor (31) of the platform (2).

6. Coupler element for an ultrasonic flowmeter as claimed in Claims 1 to 5,
**characterized in that**
the coupler element (1) has at least a first function surface (14), by means of which a sensor holder can be aligned around the coupler element (1) and/or by means of which the coupler element (1) can be aligned on or in relation to a pipe (25) through which the medium under measurement flows.

7. Coupler element for an ultrasonic flowmeter as claimed in Claims 1 to 6,
**characterized in that**
the coupler element (1) has at least a second function surface (9), by means of which an anti-bend protector (10) for the connecting cables can be aligned on the coupler element (1), said protector serving as a feedthrough seal for the connecting cables.

8. Coupler element for an ultrasonic flowmeter as claimed in Claims 1 to 7,
**characterized in that**
the coupler element (1) has at least a third function surface (17), by means of which a connection board (16) can be aligned on the coupler element (1).

## Revendications

1. Élément de couplage destiné à un débitmètre à ultrasons, lequel élément comporte un socle (2) avec une surface d'appui (3, 3'), sur laquelle est appliqué un élément piézoélectrique (19) et lequel socle (2) fait partie intégrante de l'élément de couplage (1),
**caractérisé**
**en ce que** le socle (2) présente une cavité (30) en forme de cuve avec un bord périphérique (29) et un fond de cuve (31), la surface - faisant face à l'élément piézoélectrique (19) - du bord (29) du socle (2) formant la surface d'appui (3, 3') pour l'élément piézoélectrique (19), laquelle surface d'appui (3, 3') présente une hauteur (HU) par rapport au fond de cuve (31) et la cavité (30) en forme de cuve étant remplie partiellement de colle.

2. Élément de couplage destiné à un débitmètre à ultrasons selon la revendication 1,
**caractérisé**
**en ce que** l'élément piézoélectrique (19), qui est appliqué sur le socle (2) de l'élément de couplage (1), déborde de la surface d'appui (3, 3') du socle.

3. Élément de couplage destiné à un débitmètre à ultrasons selon les revendications 1 à 2,
**caractérisé**
**en ce que** l'élément de couplage (1) comporte des éléments de guidage (4) qui sont répartis autour du socle (2), lesquels éléments présentent des distances A égales par rapport au socle (2) et lesquels éléments présentent des hauteurs (HN) approximativement égales.

4. Élément de couplage destiné à un débitmètre à ultrasons selon les revendications 1 à 3,
**caractérisé**
**en ce que** l'élément piézoélectrique (19) est en contact électrique avec approximativement toute la surface, à la fois sur la surface faisant face au socle (2) et sur la surface située à l'opposé du socle.

5. Élément de couplage destiné à un débitmètre à ultrasons selon les revendications 1 à 4,
**caractérisé**
**en ce qu'**un treillis métallique (21) ou des fils d'une épaisseur approximativement égale sont disposés entre l'élément piézoélectrique (19) et la surface d'appui (3, 3') et/ou entre l'élément piézoélectrique (19) et le fond de cuve (31) du socle (2).

6. Élément de couplage destiné à un débitmètre à ultrasons selon les revendications 1 à 5,
**caractérisé**
**en ce que** l'élément de couplage (1) comporte au moins une première surface fonctionnelle (14), au moyen de laquelle un support de capteur peut être aligné autour de l'élément de couplage (1) et/ou au moyen de laquelle l'élément de couplage (1) peut être aligné sur ou par rapport à une conduite (25), dans laquelle s'écoule le produit à mesurer.

7. Élément de couplage destiné à un débitmètre à ultrasons selon les revendications 1 à 6,
**caractérisé**
**en ce que** l'élément de couplage (1) comporte une deuxième surface fonctionnelle (9), au moyen de laquelle une protection anti-courbure (10) pour le câble de raccordement, laquelle sert de joint de passage pour le câble de raccordement, peut être alignée sur l'élément de couplage (1).

8. Élément de couplage destiné à un débitmètre à ultrasons selon les revendications 1 à 7,
**caractérisé**
**en ce que** l'élément de couplage (1) comporte au minimum une troisième surface fonctionnelle (17), au moyen de laquelle une platine de raccordement peut être alignée sur l'élément de couplage (1).
